# NEUE EUROPÄISCHE PATENTSCHRIFT

(11) **EP 2 477 502 B2**
(45) Veröffentlichungstag und Bekanntmachung des Hinweises auf die Entscheidung über den Einspruch: **01.01.2020**
(45) Hinweis auf die Patenterteilung: 21.08.2013
(21) Anmeldenummer: 10754494.2
(22) Anmeldetag: 15.09.2010
(51) Int. Cl.: A23C 9/14, A23C 3/033, A23C 7/04

(54) **VERFAHREN ZUR HERSTELLUNG VON LÄNGER HALTBARER FRISCHMILCH**
METHOD FOR PRODUCING FRESH MILK HAVING A LONGER SHELF LIFE
PROCÉDÉ DE PRODUCTION DE LAIT FRAIS À CONSERVATION PROLONGÉE

(30) Priorität: 16.09.2009 DE 102009044030
(43) Veröffentlichungstag der Anmeldung: 25.07.2012
(73) Patentinhaber: GEA Mechanical Equipment GmbH, 59302 Oelde (DE)
(72) Erfinder: BAUMEISTER, Egon, 59302 Oelde (DE); MEYER, Michael, 59269 Beckum (DE); WINKENHOFF, Heinrich, 59302 Oelde (DE)
(74) Vertreter: Specht, Peter
(86) Internationale Anmeldenummer: PCT/EP2010/063511
(87) Internationale Veröffentlichungsnummer: WO 2011/032957

(56) Entgegenhaltungen:
- EP-A1- 0 491 135
- WO-A1-2006/007894
- WO-A1-2006/021059
- WO-A1-2008/058844
- CN-A- 101 396 045
- DE-C1- 3 826 461
- DE-C1- 10 036 085
- DE-C1- 19 503 065
- GB-A- 1 057 286
- JP-A- 2005 229 825
- RU-C1- 2 261 610
- RU-C1- 2 261 611
- RU-C1- 2 346 447
- US-A- 1 603 726
- US-A- 2 725 186
- US-A- 3 525 629
- US-A- 4 015 772
- US-A- 4 695 270
- US-A- 4 876 100
- US-A- 5 683 733
- US-A- 5 866 804
- US-A- 5 935 632
- US-A1- 2007 270 298
- Artikel "Neuer Stern in der Milchstrasse" von Iloi Wasen, Deutsche Molkerei Zeitung, 2003, S. 40/41
- Dokumentation "Separatoren für Milch-Reinigung und Milch-Entkeimung" von Hanno R. Lehmann und Ernst Dolle als wissenschaftliche Dokumentation Nr. 12 Westfalia Separator AG, Oelde, 1. Aufl., 1986, Abb. 20 und Kapitel 3.1.2
- TEKNOTEXT AB: "Dairy processing handbook", TETRA PAK PROCESSING SYSTEMS AB , 31 December 1995 (1995-12-31), printed in 2003
- Bactofugation of liquid milks, reprinted from Milk Industry International, Jan. 1998.
- F.V. Kosikowski et al., Microfiltration, Ultrafiltration, and Centrifugation Separation and Sterilization Processes for Improving Milk and Cheese Quality, Department of food science, 1990 J. Diary Sci 73:1411-1419.
- Josef Rollie, The Use of Centrifuges to Remove Bacteria, Food Review Jun./Jul. 1986, pp. 15-16.
- G. Waes et al., Prevention of Butyric Acid Fermentation by Bacterial Centrifugation of the Cheese Milk, Bulletin of the IDF 251, Chapter 6, pp. 47-50.
- Goran Sillen et al., Removal of spores and bacteria with bactofuges: Microbiological quality of milk improved, AFLA Laval Separation AB, Die Emaehrungsindustrie, Mar. 1996, pp. 1-5.
- Moderne Bactofugen im Dienste der Molkereiindustrie, G. Sillén; Deutsche Molkerei-Zeitung, 107. Jahrgang, June 19 1986, Sonderdruck
- Milch, Wikipedia.org/wiki/milch; retrieval of homepage of October 28, 2015

## Beschreibung

Die Erfindung betrifft ein Verfahren zur Herstellung länger haltbarer Frischmilch.

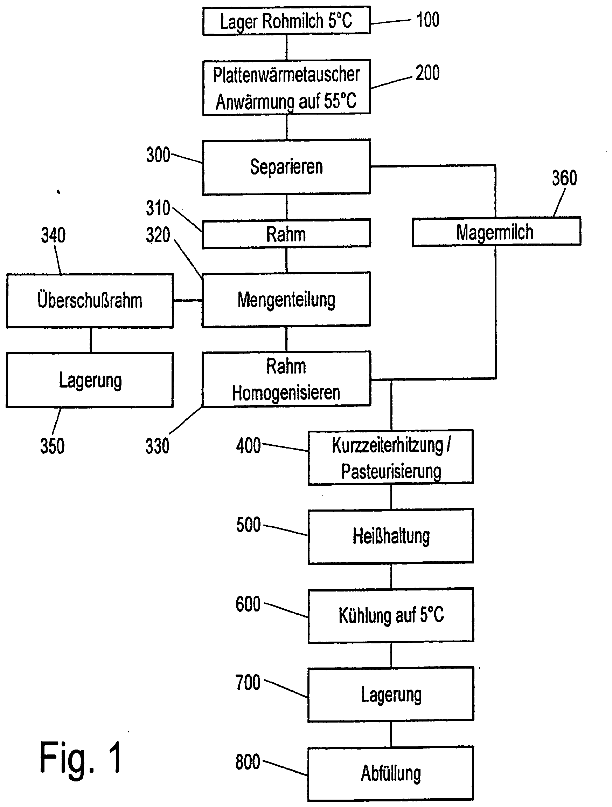

Bei einem allgemeinen Herstellungsverfahren von Trinkmilch (Fig.1) wird Rohmilch zunächst auf eine vorgegebene Entrahmungstemperatur erhitzt. Diese kann beispielsweise zwischen 55 und 62°C betragen, um eine Eiweißschädigung zu vermeiden.

Nach der Entrahmung, also der Separierung der Rohmilch in Rahm und Magermilch, wird der Rahm homogenisiert.

Anschließend wird die Magermilch gegebenenfalls durch Zugabe einer vorbestimmten Menge an homogenisiertem Rahm standardisiert.

Hiernach muss die standardisierte und homogenisierte Milch bei einer Temperatur zwischen 72°C und 75°C und einer Behandlungszeit von 15 Sekunden bis 30 Sekunden pasteurisiert werden. In diesem Schritt werden verderbnisrelevante Keime abgetötet.

Schließlich wird eine Abkühlung der Milch auf eine Temperatur von 6-7°C vorgenommen. Ein derartiges Herstellungsverfahren gewährleistet bei aseptischer Abfüllung eine Haltbarkeit von bis zu 12 Tagen.

Es sind zudem verschiedenste Verfahren bekannt, welche eine verlängerte Haltbarkeit von Milch gewährleisten. Zumeist weist hocherhitzte Milch aber signifikante Geschmacksunterschiede im Vergleich zu Frischmilch auf.

So ist eine sogenannte ESL (extended shelf life) -Milch bekannt, welche bei Lagertemperaturen T≤ 8°C eine Haltbarkeit von mindestens 20 Tagen hat.

Eine wesentliche Voraussetzung für eine längere Haltbarkeit von Milch ist eine starke Keimreduzierung von Sporenbildnern und eine Reduzierung der Gesamtkeimzahl. Diese beschleunigen den Verderb von Milch im hohen Maße.

Bekannte Verfahren, welche bei der Herstellung von ESL-Milch zum Einsatz kommen sind im Folgenden näher beschrieben:

### ESL-Direkterhitzungsanlage

Als Ausgangsprodukt wird standardisierte und thermisierte Milch bzw. nur fettstandardisierte Milch in einem Lager bereitgestellt.

In der Direkterhitzungsanlage wird das Produkt auf 70 °C bis 85 °C regenerativ angewärmt und anschließend mittels Dampfdirektinjektion auf maximal 127 °C erhitzt. Nach einer Heißhaltung der Milch von 3 Sekunden erfolgt eine Abkühlung in einem Flashkühler auf 70°C bis 85°C. Hiernach erfolgt eine aseptische Homogenisierung bei 70 °C.

### ESL-Indirekterhitzungsanlage

Als Ausgangsprodukt wird dasselbe Produkt wie bei der Direkterhitzung in einem Lager bereitgestellt. Die Milch wird auf 70 °C regenerativ angewärmt und anschließend septisch homogenisiert. Hiernach wird das Produkt im regenerativen Wärmeaustauscher auf 105°C bis 107 °C angewärmt und in der Erhitzersektion 2 Sekunden auf 127 °C erhitzt.

### ESL-Mikrofiltration

Die Rohmilch wird hier bei normaler Entrahmungstemperatur von 55°C separiert. Die Magermilch wird anschließend bei ebenfalls 55 °C mikrofiltriert. Der Rahm kann mit dem Retentat über 6 Sekunden auf 105 °C bis 125 °C erhitzt und mit der Magermilch vermischt und homogenisiert werden. Anschließend wird die Milch pasteurisiert und auf 4 °C bis 6 °C abgekühlt.

Es werden Membranen mit Porengrößen von 0,8µm bis 1,4µm eingesetzt, welche eine Keimzurückhaltung größer 99,5 % garantieren soll. Hierdurch entstehen ein keimarmes Permeat und ein keimreiches Retentat. Das Keimkonzentrat (Retentat) kann aufkonzentriert und nach einer Hocherhitzung dem Permeat zurückgeführt werden.

### ESL-Tiefenfiltration

In diesem Verfahren werden Filterkerzen aus Polypropylen eingesetzt. Die Porengröße des Vorfilters beträgt 0,3µm und die der Hauptfilter 0,2µm. Die Filtration erfolgt bei Separationstemperatur und die Abscheidung der Keime erfolgt in der Tiefe der Filter ohne die Entstehung von Retentat. Der Verfahrensablauf der Erhitzungsanlage entspricht der der Mikrofiltration.

Das Produkt der vorgestellten Verfahren ist organoleptisch vergleichbar mit herkömmlich pasteurisierter Milch. Die Entkeimung von Milch durch Mikrofiltration zum Zweck der verlängerten Haltbarkeit hat sich grundsätzlich als besonders geeignet erwiesen.

Die DE 100 36 085 C1 offenbart ein Verfahren zur Entkeimung von Milch, insbesondere in der Käsereimilchproduktion. Zur Entkeimung der Milch wird diese in einem Separator in Magermilch und Rahm getrennt. Anschließend erfolgt eine Entkeimung der Magermilch durch eine Mikrofiltration oder einen Separator.

Die US 3 525 629 A offenbart ein Verfahren zur Sterilisation von Milch zur Käseverarbeitung. Dabei wird ein bakterienhaltiger Milchschlamm in einem zweistufigen zentrifugalen Verfahren von der Milch abgetrennt, sterilisiert und in den Milchkreislauf zurückgeführt. Eine derartige Milch kann allerdings nicht als Frischmilch bezeichnet werden.

Eine zweistufige zentrifugale Entkeimung ist auch im Artikel "Neuer Stern in der Milchstrasse" von Iloi Wasen, Deutsche Molkerei Zeitung, 2003, S.40/41 offenbart. Konkrete Verfahrensabläufe sind im Artikel allerdings nicht offenbart.

Die Dokumentation "Separatoren für Milch-Reinigung und Milch-Entkeimung" von Hanno R. Lehmann und Ernst Dolle als wissenschaftliche Dokumentation Nr.12 Westfalia Separator AG, Oelde, 1.Aufl., 1986, Abb.20 und Kapitel 3.1.2 offenbart eine zweistufige Entkeimung von Magermilch. Dies hat den Nachteil, dass der Rahmanteil entweder einen hohen Anteil an Sporen aufweist oder aufgrund von Erhitzen lediglich einen geringen Anteil an β-Lactoglobulin. Zum Stand der Technik werden ferner der Artikel "Bactofugation of liquid milks" aus "Milk Industry International" 1998 genannt und das Buch "Dairy Processing Handbook", Tetra Pak Processing Systems AB, 2003. Der Artikel "Bactofugation of liquid milks" aus "Milk Industry International" schlägt eine zweistufige zentrifugale Entkeimung vor oder nach einem Standardisieren bei der Herstellung von Milch vor und das Buch eine zweistufige Entkeimung von Milch nach einer Standardisierung bei der Herstellung von Käsereimilch in Kombination mit einer Rückführung einer hitzbehandelten Keimphase aus der Entkeimung in die Milch.

Es ist die Aufgabe der Erfindung, ausgehend vom bisherigen Stand der Technik ein alternatives Verfahren für die Herstellung von länger haltbarer Frischmilch zu schaffen, wobei auch Varianten der Erfindung geschaffen werden sollen, bei welchen keine Hocherhitzung der Milch oder von Milchbestandteilen zwingend notwendig ist.

Die Erfindung löst diese Aufgabe durch die Merkmale der Ansprüche 1 und 2.

Dabei wird vorteilhaft auch der in der Frischmilch enthaltene Rahm einmal, oder besonders vorteilhaft, zweifach entkeimt.

Vorteilhafte Ausgestaltungen der Erfindung sind in den Unteransprüchen enthalten.

Durch Verwendung einer zumindest zweistufigen zentrifugalen Entkeimung kann in der Regel sowohl auf eine Filtration als auch auf eine Erhitzung der Rohmilch vor der Separierung oder der Trinkmilch nach der Standardisierung auf Temperaturen von etwa 125°C verzichtet werden.

Durch die zumindest zweistufige zentrifugale Entkeimung erfolgt eine hohe Keimreduzierung an verderbnisrelevanten Sporenbildnern. So sind in einem Liter Milch nach der zweistufigen zentrifugalen Entkeimung höchstens 1 Bacillus Cereus-Spore pro 10 ml entkeimter Flüssigkeit oder weniger dieser Sporen nachweisbar. Gerade dieser aerobe Sporenbildner verhundertfacht sich in einem Zeitraum von 6 Tagen und beeinträchtigt im hohen Maße die Haltbarkeit der Milch durch Süßgerinnung. Derart wird eine länger haltbare Milch geschaffen, die bei einer Lagertemperatur T≤ 8°C jedenfalls bis 21 Tagen haltbar ist und bei der KEIN hocherhitztes Material bei der Herstellung mehr zugegeben wird. Zwar wird nicht unbedingt eine extreme Haltbarkeit von 40 Tagen oder mehr erreicht. Dafür wird aber in dem im Vergleich zu herkömmlicher Frischmilch doch deutlich verlängerten Haltbarkeitszeitraum von minimal 20 Tagen oder mehr eine verlängerte haltbare Frischmilch geschaffen, welche keinerlei Geschmacksbeeinträchtigungen durch Hocherhitzung unterworfen ist. Selbst der Rahm braucht nicht -kann aber auf Wunsch- hocherhitzt zu werden.

Auch der erzielte Gehalt von Lactulose in der verlängert haltbaren erfindungsgemäß hergestellte Frischmilch und der Gehalt an β-Lactoglobulin sind mit den entsprechenden Gehalten in Frischmilch vergleichbar.

Die Minimierung an keimreichen Konzentrat, welches über die diskontinuierlichen Entleerungen der Separatorentrommel abgeführt wird, wird vorzugsweise durch Einsatz eines PRO+ Systems erreicht, also eines Systems nach der Art der EP1786565 mit Rippenkörper die radial außerhalb eines Tellerpakets eines Separators angeordnet sind. Hierdurch ist es möglich kleinstmöglich anfallende Konzentratmengen in einem größtmöglichen Entleerungsintervall auszutragen.

Die zumindest zweistufige zentrifugale Entkeimung kann zusätzlich zum Schritt der Entrahmung an verschiedenen Stellen in ein Verfahren zur Haltbarmachung von Frischmilch integriert werden. Die Entkeimungsstufen müssen dabei nicht zwingend aufeinander folgen.

Durch eine zusätzliche Abtrennung von Feststoffen aus der Milch während der Entrahmung kann ebenfalls bereits ein gewisser Austrag an Keimen aus der Milch bewirkt werden. Der Entrahmungsschritt ist jedoch in diesem Zusammenhang lediglich als eine Art Vorentkeimung, jedoch nicht als vollwertiger Entkeimungsschritt zu werten.

Entkeimung bedeutet hierbei die gezielte Behandlung von Milch oder Magermilch zur Klärung von Feststoffen, wie Keime, Sporen, Bakterien und dergleichen, vorzugsweise mit einem Separator, insbesondere mit einem Tellerseparator.

Bei dieser Entkeimung wird die Flüssigkeitsphase (die zulaufende Milch) zentrifugal von Feststoffen geklärt. Es ist auch denkbar -aber nicht zwingend notwendigeinen Teilstrom der derart geklärten Flüssigkeit in den Zulauf des Entkeimungsseparators zurückzuleiten, um derart die Entkeimungswirkung ggf. noch zu optimieren.

Durch die Integration einer zumindest zweistufigen zentrifugalen Entkeimung in das zuvor genannte allgemeine Herstellungsverfahren kann eine vorteilhafte Verlängerung der Haltbarkeit der Milch in der Regel auf minimal 20 Tagen erreicht werden.

Es ist vorteilhaft, wenn die zumindest zwei Entkeimungsstufen bereits vor der Entrahmung nacheinander ausgeführt werden, sodass die Anzahl der betreffenden aeroben Keimbildner bereits vor den verschiedenen Erwärmungsprozessen der folgenden Bearbeitungsschritte bereits drastisch gesenkt wurde, vorzugsweise auf einen Wert unterhalb der Nachweisgrenze.

In einer weiteren Ausführungsvariante kann zumindest eine Entkeimungsstufe bereits vor der Entrahmung erfolgen, während eine zweite Entkeimungsstufe während der Bearbeitung der Magermilch in das Verfahren integriert wird.

In einer weiteren Ausführungsvariante kann die Vollmilch nach der Standardisierung das heißt nach einem Zuführen einer Rahmmenge zur Magermilch in zwei aufeinanderfolgenden zentrifugalen Stufen entkeimt werden.

Während durch die erste zentrifugale Entkeimung die Anzahl der entsprechenden aeroben Sporenbildner um bis zu 90% gesenkt wird, kann im späteren Verlauf eine gesonderte Entkeimung der Magermilch in einer weiteren zentrifugalen Entkeimungsstufe erfolgen.

Zur Sicherung der Keimfreiheit ist es bei dieser Ausführungsvariante von Vorteil, wenn nach dem Separationsschritt des Entrahmens der Rahm kurzzeitig auf eine Temperatur vorzugsweise zwischen 100-140°C erhitzt wird, um sowohl eine Keimfreiheit des Rahms als auch der Magermilch nach Wiedervermischen zu gewährleisten.

Da sich eine Keimfreiheit des Rahms vorteilhaft bei der Lagerung von Überschussrahm erweist, kann der Rahm direkt nach dem Entrahmen und vor der Mengenteilung kurzzeitig erhitzt werden, sodass auch der Überschussrahm entkeimt wird.

Zur Gewährleistung der Keimfreiheit bei der Lagerung der hergestellten länger haltbaren Frischmilch ist eine an sich bekannte aseptische Abfüllung vorteilhaft. Nachfolgend wird die Erfindung anhand mehrerer Ausführungsbeispiele unter Bezugnahme auf die Zeichnungen näher beschrieben.

Es zeigt:
- Fig. 1: einen schematischen Ablauf eines Verfahrens zur Herstellung von Frischmilch;
- Fig. 2: einen schematischen Ablauf einer ersten erfinderischen Ausführungsvariante eines Verfahrens zur Herstellung von länger haltbarer Frischmilch;
- Fig. 3: ein vereinfachtes Schaltbild einer Anordnung zum Betreiben der ersten erfinderischen Ausführungsvariante;
- Fig. 4a, 4b: schematische Abläufe von zwei erfinderischen Ausführungsvarianten eines Verfahrens zur Herstellung von länger haltbarer Frischmilch;
- Fig. 5: ein vereinfachtes Schaltbild einer Anordnung zum Betreiben der zweiten erfinderischen Ausführungsvariante;

Fig. 1 zeigt ein Fluss-Blockdiagramm, welches einen bekannten Herstellungsprozess für "traditionell hergestellte Frischmilch" wiedergibt.

Gelagerte Rohmilch 100 wird hierbei mit einer Temperatur von 2-8°C, vorzugsweise 5°C, mittels eines Plattenwärmetauschers im Schritt 200 auf eine Entrahmungstemperatur von 50-60°C, vorzugsweise 55°C, erwärmt bzw. angewärmt. Anschließend wird die Rohmilch in einem Separator in Rahm 310 und Magermilch 360 im Schritt 300 zentrifugal getrennt, bzw. die Milch wird entrahmt. Der Rahm 310 wird anschließend je nach erwünschtem Rahmgehalt der Milch im Schritt 320 aufgeteilt, wobei überschüssiger Rahm (Schritt 340) gegebenenfalls gelagert (Schritt 350) werden kann. Anschließend wird der Rahm in Schritt 330 homogenisiert, so dass ein Zerfall von Fettkugeln zur Stabilität gegen das Aufrahmen erfolgt.

Die Magermilch (Schritt 360) wird anschließend mit der gewünschten Rahmmenge vermischt, standardisiert, und im Schritt 400 auf eine Temperatur von 70-80°C, vorzugsweise 74°C, mittels eines Plattenwärmetauschers angewärmt bzw. kurzzeiterhitzt und im Schritt 500 entsprechend lange heißgehalten. Bei dieser Temperatur sollen verderbnisrelevante Mikroorganismen abgetötet und unerwünschte Enzyme inaktiviert werden.

Zur Verminderung des Keimwachstums wird die Milch im Anschluss vorzugsweise mit einem Plattenwärmetauscher, Schritt 600, bis auf 4-6°C, vorzugsweise 5°C, zur Lagerung (Schritt 700) abgekühlt. Eine aseptische Abfüllung der Milch, Schritt 800, in Flaschen oder in aseptische Trinkkartons und der Verbrauch der abgefüllten Milch ist in der Regel innerhalb von 12 Tagen möglich.

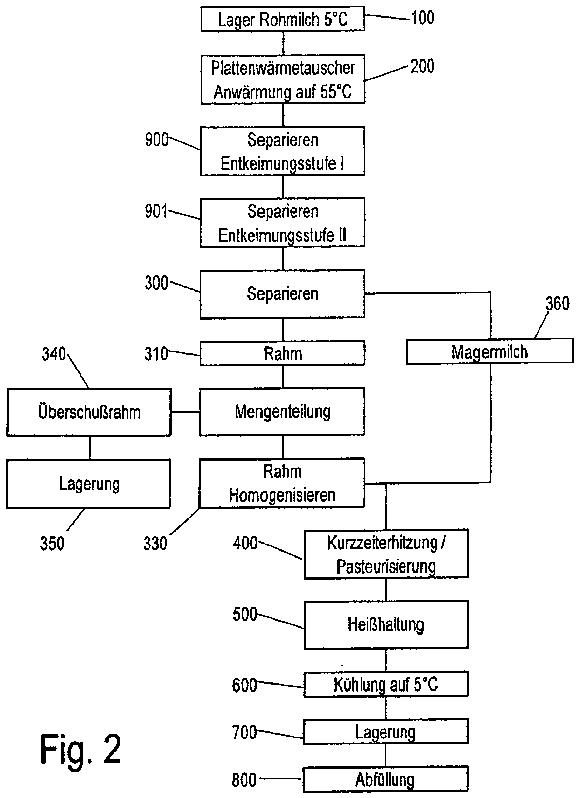

Fig.2 stellt ein Blockdiagramm dar, in welchem zusätzlich zu den bisher bekannten Schritten zwei Entkeimungsstufen 900, 901 beigefügt wurden. Diese zwei Entkeimungsstufen werden vor der Entrahmung bzw. dem Entrahmen der Rohmilch (Schritt 300) in den Prozess integriert.

Hierbei wird nach dem Erhitzen auf eine Separierungstemperatur von 50-60°C, vorzugsweise 55°C, Schritt 200, die Rohmilch in zwei Entkeimungsschritten 900 und 901 von Bakterien und Sporen befreit. Damit ist bereits vor dem Entrahmungsschritt eine Entkeimung bzw. ein Entkeimen der Milch bei vorzugsweise 55°C erfolgt.

Man erhält somit bei der Entrahmung sowohl im Wesentlichen sporenfreien Rahm (Schritt 310) als auch keimfreie Magermilch (Schritt 360), wobei der Rahm im späteren Verlauf zwecks Standardisierung der Magermilch wieder zugeführt werden kann. Eine Pasteurisierung der Trinkmilch nach der Standardisierung kann dabei bei 74-85°C, vorzugsweise 80°C erfolgen, so dass hierbei verbliebene verderbnisrelevante Mikroorganismen und unerwünschte Enzyme entsprechend abgetötet oder inaktiviert werden.

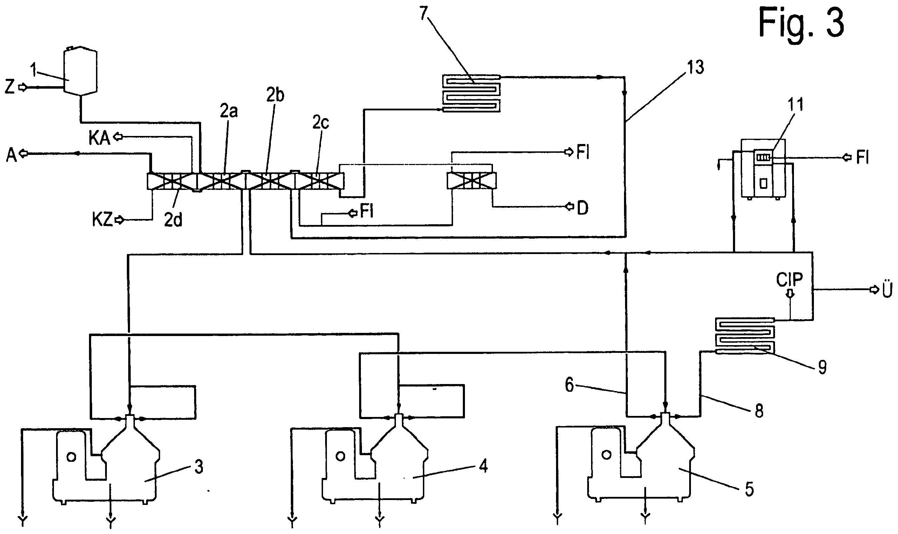

Fig.3 zeigt das Schaltbild einer Anlage, welche nach dem in Fig.2 aufgeführten Schema betrieben wird. Dabei gelangt Rohmilch über einen Zulauf Z in einen Lagertank 1, in welchem die Rohmilch bei vorzugsweise 4-6°C gelagert wird. Vom Lagertank wird die Rohmilch über die Teilsektion 2a eines gegenläufigen Plattenwärmetauschers 2 geleitet, wo die Rohmilch auf eine Temperatur von 50-60°C, vorzugsweise 55°C, angewärmt wird.

Die Rohmilch wird nunmehr bei dieser Temperatur in einen ersten Entkeimungsseparator 3 überführt. In diesem Schritt erfolgt eine Grobentkeimung der Milch, wobei die Anzahl an verderbnisrelevanten Sporenbildnern um etwa 90% gesenkt werden kann.

Nach der Grobentkeimung wird die Rohmilch in einen zweiten Entkeimungsseparator 4 überführt. In diesem zweiten Entkeimungsschritt werden Keime derart zuverlässig gereinigt, dass zumindest Bacillus Cereus-Sporen nicht mehr nachweisbar sind.

Im Anschluss erfolgt die Entrahmung der entkeimten Rohmilch, durch einen Entrahmungsseparator 5, in welchem die Rohmilch in Rahm und Magermilch getrennt wird.

Der Rahm verlässt den Entrahmungsseparator 5 über die Leitung 8 und kann dabei durch den Wärmetauscher 9 auf vorzugsweise 74°C gehalten werden. Alternativ kann durch den Wärmetauscher 9 der Rahm auf eine Temperatur von 110-140°C, vorzugsweise 125°C, erwärmt werden, um so eine zusätzliche thermische Nachentkeimung anzuschließen. Über eine gesonderte Einleitung CIP kann ggf. auch eine CIP-Reinigung (cleaning in process) der Anlage erfolgen.

Durch ein nicht dargestelltes Ventil erfolgt eine Mengenteilung des Rahms, wobei ein Teil des Rahms als Überschussrahm Ü aus dem Prozess entfernt und gelagert werden kann. Alternativ kann auch noch zusätzlicher Rahm dem Prozess zugeführt werden. Nachdem die Menge des Rahms auf einen vorgegebenen Wert eingestellt ist, wird der Rahm in einen Homogenisator 11 geleitet. Anschließend wird der Rahm über ein nicht dargestelltes Ventil in die Magermilch rückgeführt.

Dieser Vorgang, auch Standardisierung genannt, findet an einem nicht dargestellten Verbindungsstück als Verbindung der Magermilchleitung mit der Rahmleitung statt.

Daraufhin wird die standardisierte Frischmilch über eine Leitung in den Plattenwärmetauscher 2 geführt, wo sie bei der Durchleitung von vorzugsweise 55°C (Sektion 2b) auf vorzugsweise 74°C (Sektion 2c) angewärmt wird. Zum Erwärmen der Milch wird im vorliegenden Beispiel Wasserdampf D genutzt, welcher durch Kondensation im Gegenstrom den benötigten Wärmeeintrag erbringt. Im Anschluss wird die Milch zur Warmhaltung über einen weiteren Wärmetauscher 7 geleitet. Durch das Anwärmen auf vorzugsweise 74°C erfolgt eine schonende Inaktivierung von Sporenbildnern.

Die standardisierte Frischmilch (T= ca. 74°C) wird im Anschluss in die Sektion 2c des Plattenwärmetauschers und dort über die Sektion 2b (T_{Milch}=ca. 55°C), Sektion 2a (T_{Milch}= ca. 8°C) und Sektion 2d (T_{Milch}= ca. 4°C) auf eine Temperatur von 4-6°C abgekühlt. Sektion 2d kann als Eiskühlung ausgelegt werden, mit einem Kühlmittelzulauf KZ und einem Kühlmittelablauf KA. Über einen Ablauf A wird die nunmehr länger haltbare Frischmilch zu einer aseptischen Abfüllanlage weitergeleitet. Entsprechende Mess- und Kontrollvorrichtungen der Parameter (Druck, Keimzahl, Zellzahl, Temperatur, Motorleistung der Separatoren usw.) wurden im vorliegenden Schaltplan zugunsten der Übersichtlichkeit nicht abgebildet.

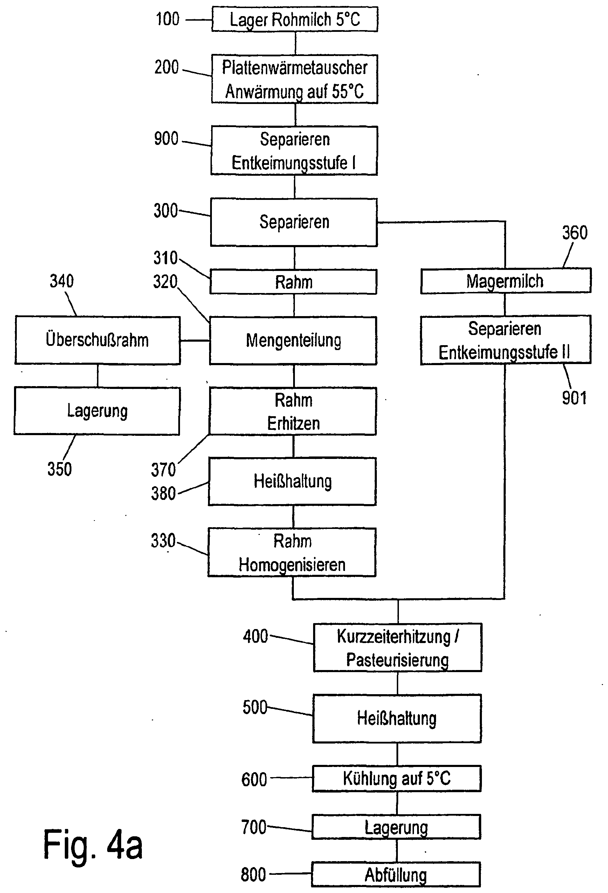

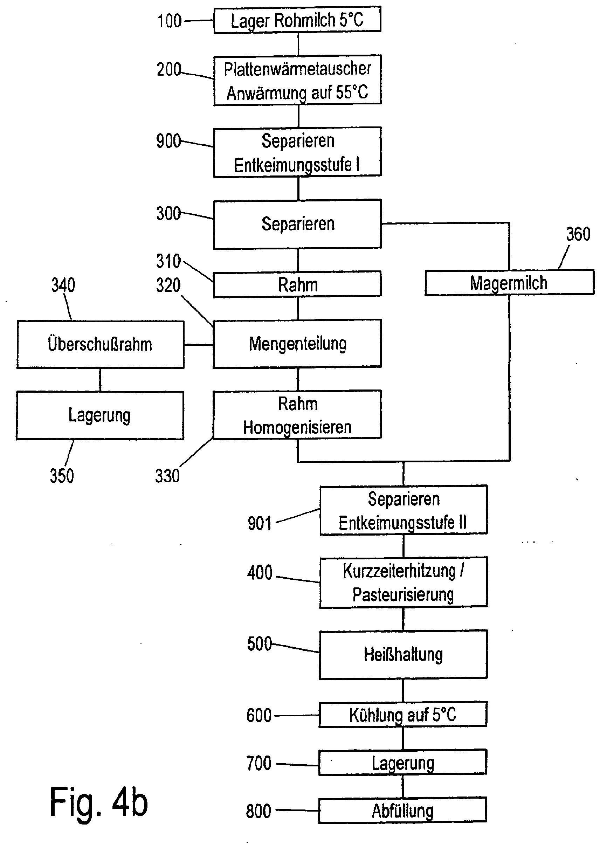

In Fig.4 sind die beiden Entkeimungsstufen 900, 901 an verschiedenen Stellen des Prozessablaufs in diesen integriert. Während die erste Entkeimung 900 vor der Entrahmung 300 bzw. des Separierens der Rohmilch in Rahm (Schritt 310) und Magermilch (Schritt 360) erfolgt, dient die Entkeimungsstufe 901 zur Entkeimung der Magermilch (Schritt 360). Der abgetrennte Rahm wird im Anschluss an den Entrahmungsschritt zusätzlich auf vorzugsweise 125°C erhitzt, um so eine Keimfreiheit des Rahms zu gewährleisten.

Nach der Abtrennung (Schritt 320) des Überschussrahms (Schritt 340) wird eine vorgesehene Menge an Rahm der keimfreien Magermilch 360 zugeführt. Anschließend erfolgt ein nochmaliges Anwärmen der Trinkmilch (Schritt 400), um ggf. verbliebene verderbnisrelevante Mikroorganismen oder Enzyme zu inaktivieren. Daran schließen sich eine Heißhaltung Schritt 500 und ein Kühlvorgang (Schritt 600) an, so dass die entstandene Trinkmilch bei einer Temperatur von vorzugsweise 5°C oder weniger gelagert und abgefüllt werden kann.

In dem Beispiel der Fig. 4a erfolgen somit eine erste Entkeimung der Rohmilch vor dem Separieren und eine zweite Entkeimung der Magermilch nach dem Separieren von Rahm und Magermilch. Somit sind beide Bestandteile der Frischmilch, Rahm und Magermilch, in diesem Prozess gesondert entkeimt.

Alternativ ist es auch denkbar, den homogenisierten Rahm nicht hoch zu erhitzen sondern ihn nach der Homogenisierung wieder in die Magermilch zur Standardisierung zu leiten und dann dieses Gemisch aus Magermilch und Rahm gemeinsam einer zweiten Entkeimung 901 zu unterziehen. Daran können sich dann wieder die Schritte 400 bis 800 zur abschließenden Verarbeitung zur abgefüllten Frischmilch anschließen (siehe Fig. 4b).

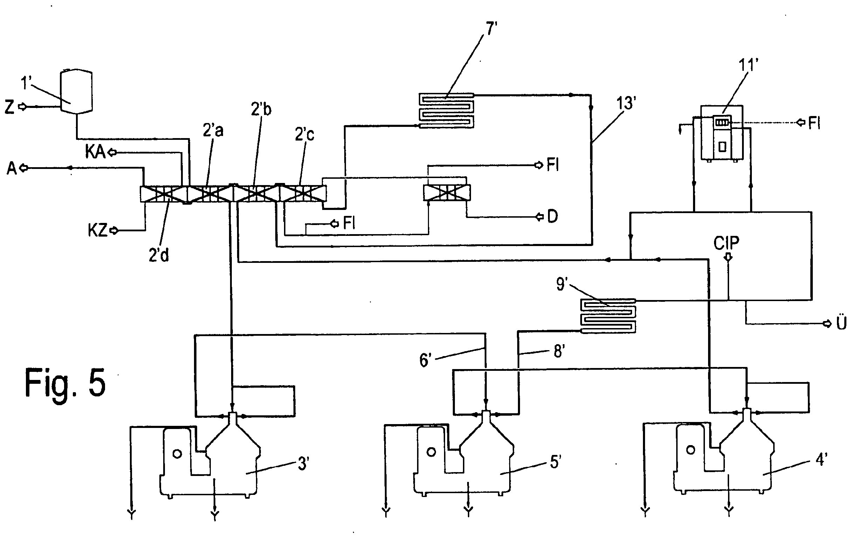

Fig.5 zeigt das Schaltbild einer Anlage welche nach dem in Fig.4a aufgeführten Schema betrieben wird. Dabei wird die Rohmilch analog zu Figur 3 in einem Plattenwärmetauscher 2' auf 55°C erwärmt und anschließend in einem Entkeimungsseparator 3' grobentkeimt.

Im Unterschied zum Ausführungsbeispiel der Fig.3 erfolgt die Entrahmung der entkeimten Rohmilch durch einen Entrahmungsseparator 5' bereits nach dem ersten Entkeimungsschritt.

Nach der Entrahmung wird die Magermilch in einen zweiten Entkeimungsseparator 4' geleitet, wo die Magermilch, gesondert vom Rahm, nochmals entkeimt wird.

Die verbleibenden Prozessschritte werden apparativ analog zu Fig.3 gelöst.

Gegenüber dem Behandlungsverfahren bei der Pasteurisierung von "traditionell hergestellter Frischmilch" werden bei der Herstellung von länger haltbarer Frischmilch erhöhte Ansprüche an die Qualität der Rohmilch, der Verarbeitung, hinsichtlich der Reinheit und an die Lagerung, hinsichtlich der Kühlung gestellt. So kommt für eine Abfüllung in erster Linie eine aseptische Abfüllung in Frage. Die Rohmilch sollte erster Güte sein und in der Regel nicht älter als 48 Stunden.

Alternativ zu den bisher dargestellten drei Ausführungsvarianten ist ebenso erfindungsgemäß eine zweistufige zentrifugale Entkeimung nach Standardisierung der Milch möglich. Hierfür kommt beispielsweise als Entrahmungsseparator das Modell der Anmelderin MSE 230-01-777 in Frage und als Entkeimungsseparatoren das Modell CND-215-01-076 (zusätzlich auf ein PRO+ System umgerüstet, wie in EP1786565 beschrieben) und das Modell CSE-230-01-777 in Betracht. Als Entkeimungs- und Entrahmungsseparatoren werden vorzugsweise kontinuierlich arbeitende selbstentleerende Tellerseparatoren genutzt.

Dabei kann eine bislang herkömmliche Pasteur-Anlage problemlos durch zwei zusätzliche Entkeimungsseparatoren und entsprechenden Heizungs- bzw. Kühlvorrichtungen für Rahm nachgerüstet werden.

Die bei dem Verfahren abgeführte Phase aus Bakterien und ggf. einen Anteil an Milch wird im Anschluss bevorzugt verworfen. Eine Sterilisation dieser Phase durch Erhitzen, also ein Abtöten der Bakterien, und eine Rückführung einer solchen sterilisierten Phase in die entkeimte Frischmilch erfolgt nicht, da dies die Qualität der Frischmilch, insbesondere deren Gehalt an β-Lactoglobulin und Lactulose negativ beeinflusst.

β-Lactoglobulin ist ein Molkenprotein, welches in der Kuhmilch vorkommt. Ein hoher Gehalt an β-Lactoglobulin ist ein Idikator für eine hohe Milchqualität. Bei der Erhitzung der Milch kommt es zu einer Denaturierung des Milcheiweiß und folglich zu einem geringeren Gehalt an Molkenproteinen, so auch an β-Lactoglobulin.

Lactulose ist ein Nebenprodukt einer Umlagerungsreaktion von Milchzucker, welche bei Hitzebehandlung erfolgt. Lactulose wirkt abführend und kann nicht vom menschlichen Körper verwertet werden. Lactulose ist in Rohmilch nicht vorhanden. Daher ist ein niedriger Lactulosegehalt ein Indikator für Frische und Qualität der Milch.

Im Folgenden sind einige Richtwerte für einen Lactulosegehalt und einen ßLactoglobulingehalt aus der Direktive 92/46/EEC des Rates der Europäischen Gemeinschaft aufgeführt. Zudem wird ein Vorschlag des Bundesministeriums für Ernährung und Lebensmittel für den β-Lactoglobulingehalt in verschiedenen verarbeiteten Milchsorten angegeben.

| Produkt | | EU Vorschlag (92/46/EEC) | Vorschlag des BFEL |
|---|---|---|---|
| Sterilisierte | untere Grenze | > 600 mg Lactulose / 1 | - |
| Milch | untere Grenze | < 50 mg β-Lactoglobulin / 1 | |
| | obere Grenze | | < 1200 mg Lactulose / 1 |
| | untere Grenze | > 100 mg Lactulose / 1 | - |
| UHT - Milch | obere Grenze | < 50 mg β-Lactoglobulin / 1 | > 400 mg Lactulose / 1 |
| | untere Grenze | Peroxidase negativ | Peroxidase negativ |
| Hocherhitzte | | | |
| Milch | obere Grenze | < 50 mg Lactulose / 1 | > 2000 mg β-Lactoglobulin / 1 |
| | obere Grenze | > 2000 mg β-Lactoglobulin / 1 | |
| | untere Grenze | | Phosphatase negativ |
| | | Phosphatase negativ | |
| Pasteurisierte | | | |
| Milch | obere Grenze | Peroxidase positiv | Peroxidase positiv |
| | obere Grenze | Lactulose nicht nachweisbar | |
| | | > 2600 mg β-Lactoglobulin /1 | |
| | obere Grenze | | > 3000 mg β-Lactoglobulin / 1 |

In der oben aufgeführten Tabelle werden Sterilisierte Milch, Ultrahochtemperierte Milch (UHT), Hocherhitzte Milch und Pasteurisierte Milch gegenübergestellt und Richtwerte für die einzelnen Sorten angegeben, um eine Definition einzelner Milchsorten zu ermöglichen und einer Verwechslungsgefahr gegenüber dem Verbraucher vorzubeugen. Dabei ist eine Pasteurisierte Milch mit einer traditionell hergestellten Frischmilch gleichzusetzen, wobei das Verfahren der Verarbeitung in Fig. dargestellt ist.

Im Folgenden werden einzelne Messwerte einer rohmilchentkeimten pasteurisierten Milch, welche nach einer Ausführungsvariante des Verfahrens gemäß Fig. 2 behandelt wurde, mit den Messwerten einer mikrofiltrierten oder direkterhitzten Milch verglichen.

Dabei richtet sich die Einstufung einer pasteurisierten Milch nach den in der oberen Tabelle genannten Richtwerten für Lactulose und ß-Lactoglobulin

| Produkt | Werte | Einstufung |
|---|---|---|
| Rohmilchentkeimte | 3810 mg /l β-Lactoglobulin | pasteurisierte Milch |
| pasteurisierte Milch | 5 mg/l Lactulose | |
| ESL - Milch mittels | 3980 mg/l β-Lactoglobulin | noch pasteurisierte Milch |
| Filtrierung | 9 mg/l Lactulose | |
| ESL - Milch mittels Direkterhitzung | 1490 mg/l β-Lactoglobulin | Hocherhitzte Milch |
| | 26 mg/l Lactulose | |

Wie man den Messwerten entnehmen kann ist die Rohmmilchentkeimte pasteurisierte Milch mit pasteurisierter Milch, bzw. traditionell hergestellter Frischmilch qualitativ gleichwertig.

| | | | |
|---|---|---|---|
| **Bezugszeichen:** | | Magermilchleitung | 6, 6', 6" |
| Lagertank (Vorlauf) | 1, 1', 1" | Rahmleitung | 8, 8', 8" |
| Entkeimungsseparator | 3, 3', 3" | | |
| Entrahmungsseparator | 5, 5', 5" | | |
| Wärmetauscher | 7, 7', 7" | | |
| Wärmetauscher | 9, 9', 9" | | |
| Homogenisator | 11, 11', 11" | | |
| Frischmilchleitung | 13, 13', 11" | Magermilch | 360 |
| | | Erhitzen (Rahm) | 370 |
| | | Heißhaltung (Rahm) | 380 |
| Lagerung Rohmilch | 100 | Kurzzeiterhitzg./Pasteurisierg. | 400 |
| Anwärmung | 200 | Heißhaltung | 500 |
| Entrahmung | 300 | Kühlung | 600 |
| Rahm | 310 | Lagerung | 700 |
| Mengenteilung | 320 | | |
| Homogenisieren (Rahm) | 330 | Temperier- Flüssigkeitszu- und -ablauf | F1 |
| Überschussrahm | 340 | Separieren Entkeimer I | 900 |
| | | Separieren Entkeimer II | 901 |
| Plattenwärmetauscher | 2, 2', 2" | Wasserdampf | D |
| Entkeimungsseparator | 4, 4', 4" | | |
| Lagerung (Überschussrahm) | 350 | Kühlmittelablauf | KA |
| | | Abfüllung | 800 |
| | | Reinigung | CIP |
| Zulauf (Rohmilch) | Z | | |
| Ablauf (Frischmilch) | A | | |
| Ablauf an Überschussrahm | Ü | | |
| Kühlmittelzulauf | KZ | | |

## Patentansprüche

1. Verfahren zur Herstellung von länger haltbarer Frischmilch, die bei einer Lagertemperatur T≤ 8°C jedenfalls bis 21 Tage haltbar ist, wobei kein hocherhitztes Material bei der Herstellung zugegeben wird, und bei dem eine zumindest zweistufige zentrifugale Entkeimung (900, 901)
a. von Rohmilch vor einem Standardisieren oder
b. von Vollmilch nach einem Standardisieren durchgeführt wird,
c. wobei keine Rückführung einer sterilisierten Phase in die entkeimte Frischmilch erfolgt.

2. Verfahren zur Herstellung von länger haltbarer Frischmilch, die bei einer Lagertemperatur T≤ 8°C jedenfalls bis 21 Tage haltbar ist, wobei kein hocherhitztes Material bei der Herstellung zugegeben wird, und bei dem eine zumindest zweistufige zentrifugale Entkeimung (900, 901) durchgeführt wird, wobei zumindest eine Entkeimungsstufe bereits vor einer Entrahmung erfolgt, während eine zweite Entkeimungsstufe während einer Bearbeitung von Magermilch erfolgt und dass keine Rückführung einer sterilisierten Phase in die entkeimte Frischmilch erfolgt.

3. Verfahren nach Anspruch 1, **dadurch gekennzeichnet, dass** im Anschluss an die zumindest zweistufige zentrifugale Entkeimung (900, 901) ein Anwärmen (400) von Milch durchgeführt wird.

4. Verfahren nach einem der vorhergehenden Ansprüche, **dadurch gekennzeichnet, dass** die Anwärmung (400) regenerativ bei 70-85°C durchgeführt wird.

5. Verfahren nach einem der vorhergehenden Ansprüche, **dadurch gekennzeichnet, dass** das Verfahren folgende Schritte aufweist:
a. Anwärmen (200) von Rohmilch auf eine vorbestimmte Entrahmungstemperatur,
b. Entrahmen (300) der Rohmilch
i. Teilen (320) der Menge des Rahms (310) anhand von vorgegebenen Richtwerten, sowie
c. Standardisieren der Milch;
d. Erhitzen (400) der standardisierten Milch
e. Heißhaltung (500) der Milch
f. Abkühlen (600) der Milch; und
g. Abfüllen (800).

6. Verfahren nach einem der vorhergehenden Ansprüche, **dadurch gekennzeichnet, dass** die zumindest zweistufig-aufeinanderfolgende zentrifugale Entkeimung (900, 901) nach dem Standardisieren der Milch und vor dem Abfüllen (800) durchgeführt wird.

7. Verfahren nach einem der vorhergehenden Ansprüche, **dadurch gekennzeichnet, dass** zumindest ein zentrifugales Entkeimen (900) nach dem Anwärmen (200) der Rohmilch und vor dem Entrahmen (300) erfolgt und dass zumindest eine weiteres zentrifugales Entkeimen (901) der Magermilch (360) durchgeführt wird.

8. Verfahren nach Anspruch 7, **dadurch gekennzeichnet, dass** ein Anwärmen (390) des Rahms (310) zur Entkeimung nach dem Entrahmen (300) der Rohmilch durchgeführt wird.

9. Verfahren nach einem der vorhergehenden Ansprüche, **dadurch gekennzeichnet, dass** ein Anwärmen des Rahms (310) zur Entkeimung nach dem Entrahmen (300) der Rohmilch und vor der Teilung (320) der Menge des Rahms (310) erfolgt.

10. Verfahren nach einem der vorhergehenden Ansprüche, **dadurch gekennzeichnet, dass** das Abfüllen (800) als aseptisches Abfüllen durchgeführt wird.

11. Verfahren nach einem der vorhergehenden Ansprüche, **dadurch gekennzeichnet, dass** zumindest eine Stufe des zentrifugalen Entkeimens in einem Separator mit einem Tellerstapel aus Trenntellern durchgeführt wird.

12. Verfahren nach einem der vorhergehenden Ansprüche, **dadurch gekennzeichnet, dass** ein Separator mit Rippen verwendet wird, die radial außerhalb der Trennteller in einer Trommel des Separators angeordnet sind.

## Claims

1. A method for producing fresh milk which has a longer shelf life and can be kept at a storage temperature T ≤ 8°C for at least up to 21 days, wherein no high-heated material is added during the preparation, and in which an at least two-step centrifugal germ removal (900, 901)
a) from raw milk before a standardization or
b) from whole milk after a standardization is carried out,
c) wherein a sterilized phase is not recirculated into a fresh milk from which germs have been removed.

2. A method for producing fresh milk which has a longer shelf life and can be kept at a storage temperature T ≤ 8°C for up to 21 days in any case, wherein no high-heated material is added during production, and in which an at least two-step centrifugal germ removal (900, 901) is carried out, wherein at least one germ removal stage already proceeds before a skimming, whereas a second germ removal stage proceeds during processing of skimmed milk, and in that a sterilized phase is not recirculated into a fresh milk from which germs have been removed.

3. The method as claimed in claim 1, **characterized in that**, subsequently to the at least two-step centrifugal germ removal (900, 901), milk is heated (400).

4. The method as claimed in any one of the preceding claims, **characterized in that** the heating (400) is carried out regeneratively at 70-85°C.

5. The method as claimed in any one of the preceding claims, **characterized in that** the method has the following steps:
a) heating (200) of raw milk to a predetermined skimming temperature;
b) skimming (300) the raw milk
i. dividing (320) the amount of cream (310) on the basis of predetermined guide values, and also
c) standardizing the milk;
d) heating (400) the standardized milk
e) hot-holding (500) the milk
f) cooling (600) the milk; and
g) packaging (800).

6. The method as claimed in any one of the preceding claims, **characterized in that** the at least two-step successively following centrifugal germ removal (900, 901) is carried out after standardizing the milk and before packaging (800).

7. The method as claimed in any one of the preceding claims, **characterized in that** at least one centrifugal germ removal (900) proceeds after the heating (200) of the raw milk and before the skimming (300) and **in that** at least one further centrifugal germ removal (901) from the skimmed milk (360) is carried out.

8. The method as claimed in claim 7, **characterized in that** the cream (310) is heated (390) for germ removal after skimming (300) the raw milk.

9. The method as claimed in any one of the preceding claims, **characterized in that** the cream (310) is heated for germ removal after skimming (300) the raw milk and before dividing (320) the amount of cream (310).

10. The method as claimed in any one of the preceding claims, **characterized in that** the packaging (800) is carried out as aseptic packaging.

11. The method as claimed in any one of the preceding claims, **characterized in that** at least one stage of the centrifugal germ removal is carried out in a separator having a disk stack made of separation disks.

12. The method as claimed in any one of the preceding claims, **characterized in that** a separator with fins is used which are arranged radially outside the separation disks in a drum of the separator.

## Revendications

1. Procédé de production de lait frais longue conservation, qui peut être conservé dans tous les cas jusqu'à 21 jours à une température de stockage T ≤ 8 °C, aucune matière chauffée à très haute température n'étant ajoutée lors de la production, et dans lequel est réalisée une pasteurisation (900, 901) par centrifugation en au moins deux étapes
a) du lait cru avant une normalisation ou
b) du lait entier après une normalisation.
c) aucun réacheminement d'une phase stérilisée dans le lait frais pasteurisé n'étant effectué.

2. Procédé de production de lait frais longue conservation, qui peut être conservé dans tous les cas jusqu'à 21 jours à une température de stockage T ≤ 8 °C, aucune matière chauffée à très haute température n'étant ajoutée lors de la production, et, dans lequel est réalisée une pasteurisation (900, 901) par centrifugation en au moins deux étapes, dans lequel au moins une étape de pasteurisation est déjà effectuée avant l'écrémage, alors qu'une deuxième étape d'écrémage est effectuée pendant un traitement du lait écrémé et qu'aucun réacheminement d'une phase stérilisée dans le lait frais pasteurisé n'est effectué.

3. Procédé selon la revendication 1, **caractérisé en ce qu'**après la pasteurisation (900, 901) par centrifugation en au moins deux étapes, un chauffage du lait (400) est réalisé.

4. Procédé selon l'une des revendications précédentes, **caractérisé en ce que** le chauffage (400) est réalisé par régénération de 70 à 85° C.

5. Procédé selon l'une des revendications précédentes, **caractérisé en ce que** le procédé présente les étapes suivantes :
a) le chauffage (200) du lait cru à une température d'écrémage prédéterminée ;
b) l'écrémage (300) du lait cru
i. la division (320) de la quantité de crème (310) sur la base de critères prédéterminés, et
c) la normalisation du lait ;
d) le chauffage (400) du lait normalisé
e) le maintien à la chaleur (500) du lait
f) le refroidissement (600) du lait ; et
g) le conditionnement (800).

6. Procédé selon l'une des revendications précédentes, **caractérisé en ce que** la pasteurisation par centrifugation en au moins deux étapes consécutives (900, 901) est réalisée après la normalisation du lait et avant le conditionnement (800).

7. Procédé selon l'une des revendications précédentes, **caractérisé en ce qu'**au moins une pasteurisation par centrifugation (900) s'effectue après le chauffage (200) du lait cru et avant l'écrémage (300) et **en ce qu'**au moins une autre pasteurisation par centrifugation (901) du lait écrémé (360) est réalisée.

8. Procédé selon la revendication 7, **caractérisé en ce qu'**un chauffage (390) de la crème (310) pour la pasteurisation est réalisé après l'écrémage (300) du lait brut.

9. Procédé selon l'une des revendications précédentes, **caractérisé en ce qu'**un chauffage de la crème (310) pour la pasteurisation est réalisé après l'écrémage (300) du lait cru et avant la division (320) de la quantité de crème (310).

10. Procédé selon l'une des revendications précédentes, **caractérisé en ce que** le conditionnement (800) est réalisé en un conditionnement aseptique.

11. Procédé selon l'une des revendications précédentes, **caractérisé en ce qu'**au moins une étape de la pasteurisation par centrifugation est réalisée dans un séparateur comportant un empilement de plateaux de séparation.

12. Procédé selon l'une des revendications précédentes, **caractérisé en ce que** l'on utilise un séparateur doté de sillons qui sont disposés radialement à l'extérieur des plateaux de séparation dans un tambour du séparateur.
